# EUROPÄISCHE PATENTSCHRIFT

(11) **EP 2 998 131 B1**
(45) Veröffentlichungstag und Bekanntmachung des Hinweises auf die Patenterteilung: **24.10.2018**
(21) Anmeldenummer: 15172644.5
(22) Anmeldetag: 18.06.2015
(51) Int. Cl.: B60C 11/24

(54) **FAHRZEUGLUFTREIFEN**
PNEUMATIC TYRE FOR A VEHICLE
PNEUMATIQUE DE VEHICULE

(30) Priorität: 16.09.2014 DE 102014218580
(43) Veröffentlichungstag der Anmeldung: 23.03.2016
(73) Patentinhaber: Continental Reifen Deutschland GmbH, 30165 Hannover (DE)
(72) Erfinder: Rittweger, Stefan, 30163 Hannover (DE); Riekkola, Jaakko, 30169 Hannover (DE)
(74) Vertreter: Finger, Karsten

(56) Entgegenhaltungen:
- KR-B1- 101 342 669
- US-A1- 2011 079 333
- US-A1- 2013 333 458

## Beschreibung

Die Erfindung betrifft einen Fahrzeugluftreifen mit einem Laufstreifen mit mindestens einem Abriebsindikator, welcher sich in einer Umfangsnut mit einem Nutgrund erstreckt und aus unterschiedlich hohen Indikatorteilen, deren Höhen in radialer Richtung von der tiefsten Stelle der Umfangsnut ermittelt werden, zusammengesetzt ist, wobei die Indikatorteile Symbole aufweisen, die, in Draufsicht betrachtet, eine schriftlicher Information liefern, welche sich mit zunehmendem Abrieb des Laufstreifens verändert, wobei die Symbole der Indikatorteile Informationen über sich mit der Profiltiefe des Fahrzeugluftreifens verändernde Fahreigenschaften liefern.

Aufgrund von gesetzlichen Bestimmungen ist es erforderlich, Laufstreifen von Fahrzeugluftreifen mit Abriebsindikatoren (Tread-Wear-Indikatoren), welche die gesetzliche Mindestprofiltiefe - 1,6 mm bei PKW-Sommerreifen - kennzeichnen, zu versehen. Da sich bei Sommerreifen bereits ab Profiltiefen von 3 mm bis 4 mm die Fahreigenschaften, insbesondere bei Nässe, verschlechtern sowie die Gefahr von Aquaplaning zunimmt, ist es sinnvoll, den Reifen bereits vor Erreichen der Mindestprofiltiefe zu wechseln. Daher werden Reifen mit Abriebsindikatoren ausgestattet, welche sicherheitsrelevante Profiltiefen entsprechend kennzeichnen.

Ein Fahrzeugluftreifen der eingangs genannten Art ist beispielsweise aus der US 2013/0333458 A1 bekannt. Der Laufstreifen dieses Fahrzeugluftreifens weist Abriebsindikatoren auf, welche in einer Umfangsnut positionierte unterschiedlich hohe Indikatorteile aufweisen. Ferner ist im Schulterbereich des Reifens, am Übergang des Laufstreifens zur Seitenwand, zumindest ein Performance-Indikator vorgesehen, welcher Symbole aufweist, die Informationen über sich mit der Profiltiefe des Fahrzeugluftreifens verändernde Fahreigenschaften liefern. Als Performance-Indikatoren können beispielsweise Vertiefungen vorgesehen sein, welche in Draufsicht ein Schnee-, ein Regen- bzw. ein Sonnensymbol darstellen. Durch den Abrieb des Laufstreifens wird als erstes das Schnee- und als letztes das Sonnensymbol abgerieben.

Bei dem aus der KR 101 342 669 B1 bekannten Fahrzeugluftreifen ist an einer Nutflanke einer Nut des Laufstreifen als TWI ein blockartiger Vorsprung vorgesehen, welcher an seiner Oberseite mit zwei einander kreuzenden, gleich tiefen Schlitzen versehen ist. Aus der US 2011/0079333 A1 ist es bekannt, in einer Nut des Laufstreifen eines Fahrzeugluftreifens zwei länderspezifisch unterschiedlich hohe Abriebsindikatoren vorzusehen.

Abriebsindikatoren, mit deren Hilfe die aktuelle Profiltiefe abgelesen werden kann, sind in verschiedenen Varianten, etwa aus der US 6 523 586 B1 oder der WO 2007/102790, bekannt. Beispielsweise weist der in der DE 36 27 832 A1 beschriebene Abriebsindikator eine Vielzahl von Stufen mit Zahlen auf, wobei die Zahlen mit der Profiltiefe korrelieren.

Die EP 1 524 131 A2 offenbart einen Fahrzeugluftreifen mit einem Laufstreifen, in dessen Blockflanken, welche Rillen begrenzen, Vertiefungen enthalten sind. In den Vertiefungen sind Zahlen zu lesen, welche Auskunft über die aktuelle Profiltiefe geben. Des Weiteren sind, wie beispielsweise aus der DE 1 933 148 A, Abriebsindikatoren bekannt, bei welchen beim Erreichen der Mindestprofiltiefe ein Warnwort erscheint.

Aus der GB 2 243 584 A ist ein mehrschichtiger Abriebsindikator, welcher aus aufeinanderliegenden Schichten mit einem unterschiedlichen Aussehen zusammengesetzt ist, bekannt. Die Schichten besitzen vorzugsweise verschiedene Farben, sodass etwa das Erreichen einer roten Schicht die Mindestprofiltiefe kennzeichnet. Die
WO 2006/102468 A2 offenbart einen Warnzeichenindikator, welcher im Laufstreifen als farbige Lage enthalten ist. Die farbige Lage kommt durch den fortschreitenden Abrieb zum Vorschein und steht in Relation zu vorab für den spezifischen Reifen vermessene Traktionseigenschaften.

Aus der US 2006 003 768 3 A1 ist ein Abriebsindikator bekannt, welcher in Abhängigkeit der aktuellen Profiltiefe zunächst verschiedene Smiley-Gesichter und nach Abrieb dieser ein Warnsymbol erkennen lässt. Ein weiterer "Smiley-Abriebsindikator" ist aus der US 6 523 586 B1 bekannt. Dieser weist zwei "Smileys" auf, wobei bei einer bestimmten Profiltiefe einer dieser Indikatoren verschwindet und gleichzeitig der Andere zum Vorschein kommt.

Ein aus drei Symbolen bestehender Abriebsindikator ist aus der EP 2 455 236 B1 bekannt, wobei eines dieser Symbole vorzugsweise S- und ein weiteres W-förmig und das dritte dreiecksförmig ausgeführt ist. Die ersten zwei Symbole werden von dem dritten Symbol umschlossen. Bei neuem Reifen ist "SW" - für "Smart Wear" zu lesen. Nach Abrieb des S-Symbols bleibt ausschließlich das W-Symbol, welches als "Worn" verstanden werden kann, übrig. Der Reifen sollte dann gewechselt werden.

Die Funktion und die gelieferte Information der aus dem Stand der Technik bekannten Abriebsindikatoren sind für Fahrzeugbenutzer meistens nicht ohne weitere Erläuterungen verständlich. Bei jenen Abriebsindikatoren, welche ein Ablesen der aktuellen Profiltiefe in Millimeter gestatten, ist der Fahrzeugbenützer kaum im Stande, ausgehend von der aktuellen Profiltiefe Rückschlüsse auf die jeweiligen Fahreigenschaften des Reifens zu ziehen.

Der Erfindung liegt daher die Aufgabe zugrunde, einen Abriebsindikator derart zu gestalten, dass auch für technisch wenig versierte Fahrzeugbenützer ohne besondere Erklärungen ersichtlich ist, wann eine Profiltiefe, die sicherheitsrelevante Fahreigenschaften des Reifens negativ beeinflusst, erreicht ist.

Gelöst wird die gestellte Aufgabe erfindungsgemäß dadurch, dass zumindest ein Indikatorteil von der Indikatoroberfläche ausgehend zwei zueinander orthogonal verlaufende Schlitze aufweist, welche einander kreuzen und unterschiedliche Tiefen aufweisen.

Der Abriebsindikator gemäß der Erfindung ermöglicht es dem Fahrzeugbenützer auf eine besonders einfache Weise festzustellen, ob der Abrieb des Laufstreifens der Reifen am Fahrzeug bereits so weit fortgeschritten ist, dass sich die Performance des Reifens, insbesondere hinsichtlich sicherheitsrelevanter Fahreigenschaften, kritisch verändert hat. Bei Sicht auf den Abriebsindikator erscheinen die im Indikatorteil vorgesehenen Schlitze bei neuem Reifen als Plus ("+"). Dieser allgemein bekannte mathematische Operator vermittelt dem Fahrzeugbenützer einen Hinweis auf "gute Fahreigenschaften" und muss daher nicht weiter erklärt werden. Gemäß der Erfindung ragen die Schlitze, ausgehend von der jeweiligen Indikatoroberfläche, in radialer Richtung in den Indikatorteil hinein, wobei zumindest zwei der einander kreuzenden Schlitze unterschiedliche Tiefen aufweisen und der tiefere Schlitz parallel zur Erstreckung der Umfangsnut verläuft. Ist der Laufstreifen soweit abgerieben, dass der orthogonal zur Umfangsnut verlaufende Schlitz verschwunden ist, erscheint der verbleibende Schlitz, vorzugsweise in Umfangsrichtung betrachtet, als Minus ("-"), ein Anzeichen dafür, dass der Abrieb des Laufstreifens bereits so weit fortgeschritten ist, dass sich bei der vorliegenden Profiltiefe Fahreigenschaften des Reifens gegenüber dem Neuzustand verschlechtert haben.

Besonders bevorzugter Weise beträgt der kleinste Abstand zwischen einem orthogonal zur Umfangsrichtung verlaufenden Schlitz und dem Nutgrund 1,6 mm, insbesondere 1,9 mm. Wird die gesetzliche Mindestprofiltiefe von 1,6 mm unterschritten, ändert sich am Abriebsindikator ein "Plus"-Symbol in ein "Minus"-Symbol. Besonders vorteilhaft ist daher die Ausführung mit 1,9 mm, da beim Erscheinen des "Minus"-Symbols die gesetzliche Mindestprofiltiefe noch nicht erreicht ist und zu dieser daher noch ein gewisser Sicherheitspuffer besteht.

Eine weitere bevorzugte Ausführungsform des Abriebsindikators gemäß der Erfindung ist dadurch gekennzeichnet, dass der Indikatorteil mit der größten Höhe keilförmig ausgebildet ist und daher eine gegenüber der Umfangsrichtung geneigte rampenförmige Indikatoroberfläche aufweist. Anfangs wird der Indikatorteil daher so abgerieben, dass sich die Rampe kontinuierlich verkürzt. Bei regelmäßiger Sicht auf den Abriebsindikator kann daher besonders einfach der fortschreitende Abrieb mitverfolgt werden. Solange der Abrieb ausschließlich im Bereich der Rampe und nicht im Bereich der Schlitze stattfindet, ist für den Fahrzeugbenützer ersichtlich, dass die Performance des Reifens trotz fortschreitendem Abrieb nahezu unverändert gut zum Neuzustand des Reifens ist.

Bei einer besonders vorteilhaften Ausführung der Erfindung enthält ein Indikatorteil Symbole in Form des Schriftzuges "W E T", welche durch Vertiefungen gebildet werden, wobei der Grund der Vertiefungen, in radialer Richtung gemessen, einen Abstand zum Nutgrund von maximal 1,4 mm oder mindestens 1,9 mm aufweist. Bei der Ausführung mit einem Abstand von maximal 1,4 mm kann der Schriftzug bei der Mindestprofiltiefe von 1,6 mm, bei Sicht auf den Abriebsindikator, nach wie vor gelesen werden und liefert in Kombination mit einen in Umfangsrichtung verlaufenden Schlitz die Information "W E T -", einen Hinweis auf erhöhte Aquaplaninggefahr. Bei der anderen Ausführungsform ist der Schriftzug "W E T" bereits bei einer Profiltiefe kleiner 1,9 mm abgerieben, was ebenfalls als Hinweis auf Aquaplaninggefahr verstanden wird. Da sich die vom Abriebsindikator gelieferte Information von selbst erklärt, benötigt der Fahrzeugbenützer vorteilhafterweise keine weiteren Kenntnisse über die Auswirkungen der aktuellen Profiltiefen auf verschiedene Fahreigenschaften.

Bei einer weiteren vorteilhaften Ausführungsform gemäß der Erfindung enthält ein Indikatorteil Symbole in Form des Schriftzuges "D R Y", welcher ebenfalls durch Vertiefungen gebildet wird, wobei der Grund der Vertiefungen, in radialer Richtung gemessen, einen Abstand zum Nutgrund von maximal 1,4 mm aufweist. In Kombination mit orthogonal zueinander verlaufenden Schlitzen unterschiedlicher Tiefe sind bei Sicht auf den Abriebsindikator in Abhängigkeit der Profiltiefe die Schriftzüge "D R Y +" bzw. "D R Y -" zu lesen, welche Auskunft über die Fahreigenschaften auf trockener Fahrbahn geben.

Bevorzugter Weise weist zumindest einer der Indikatorteile, welcher Symbole in Form von Schriftzügen enthält, von allen Indikatorteilen die geringste Höhe auf. Die Schriftzüge enthaltenden Indikatorteile werden daher, falls der Reifen bei Erreichen der Mindestprofiltiefe gewechselt wird, nicht abgerieben bzw. erst zuletzt abgerieben. Damit ist gewährleistet, dass die Schriftzüge auch bei entsprechend geringen Profiltiefen möglichst lange am Abriebsindikator erkennbar sind.

Besonders bevorzugter Weise setzt sich der Abriebsindikator aus einem Indikatorteil mit dem Schriftzug "D R Y", welcher auch eine aus zwei zueinander orthogonal verlaufenden Schlitzen bestehende Vertiefung aufweist, einen an diesen Indikatorteil anschließenden Indikatorteil mit dem Schriftzug "W E T" und dem keilförmigen Indikatorteil zusammen. Ein derartiger Abriebsindikator ändert mit zunehmendem Abrieb seinen Schriftzug von "D R Y + W E T +" über "D R Y + W E T -" in "D R Y - W E T -".

Bei einer weiteren besonders bevorzugten Ausführung setzt sich der Abriebsindikator aus einem Indikatorteil mit dem Schriftzug "W E T" und zwei an diesen Indikatorteil anschließenden Indikatorteilen, welche unterschiedlich hoch und höher als der Indikatorteil mit dem Schriftzug "W E T" ausgeführt sind, wobei sie jeweils eine aus zwei zueinander orthogonal verlaufenden Schlitzen bestehende Vertiefung aufweisen, zusammen. Die Schlitze im höchsten Indikatorteil weisen dabei vorzugsweise gleiche Tiefen auf. Ein derartiger Abriebsindikator ändert mit zunehmendem Abrieb seinen Schriftzug von "W E T + +" über "W E T +" in "W E T -" und schlussendlich in "W E T". Ein derart ausgeführter Indikator ermöglicht ein Beurteilen des Wasserableitvermögens des Reifens, wodurch frühzeitig die Profiltiefe, ab welcher die Gefahr von Aquaplaning zunimmt, einfach und schnell erkannt werden kann. Reifen mit einem solchen Abriebsindikatoren eignen sich insbesondere für den Einsatz in niederschlagsreichen Gebieten.

Weitere Merkmale, Vorteile und Einzelheiten der Erfindung werden nun anhand der Zeichnung, die schematisch mehrere Ausführungsformen der Erfindung darstellt, näher beschrieben.

Dabei zeigen
Fig. 1 einen Ausschnitt eines Laufstreifens in Schrägansicht mit einer Ausführungsvariante eines Abriebsindikators gemäß der Erfindung,
Fig. 2 eine Draufsicht auf den Abriebsindikator aus Fig. 1,
Fig. 3 einen Schnitt entlang der Linie III-III der Fig. 2,
Fig. 4 bis Fig. 7 unterschiedliche Abriebszustände des Abriebsindikators aus Fig. 1,
Fig. 8 einen Ausschnitt eines Laufstreifens in Draufsicht mit einem Abriebsindikator gemäß einer weiteren Ausführungsform der Erfindung und
Fig. 9 eine Schnittdarstellung entlang der Linie IX-IX der Fig. 8.

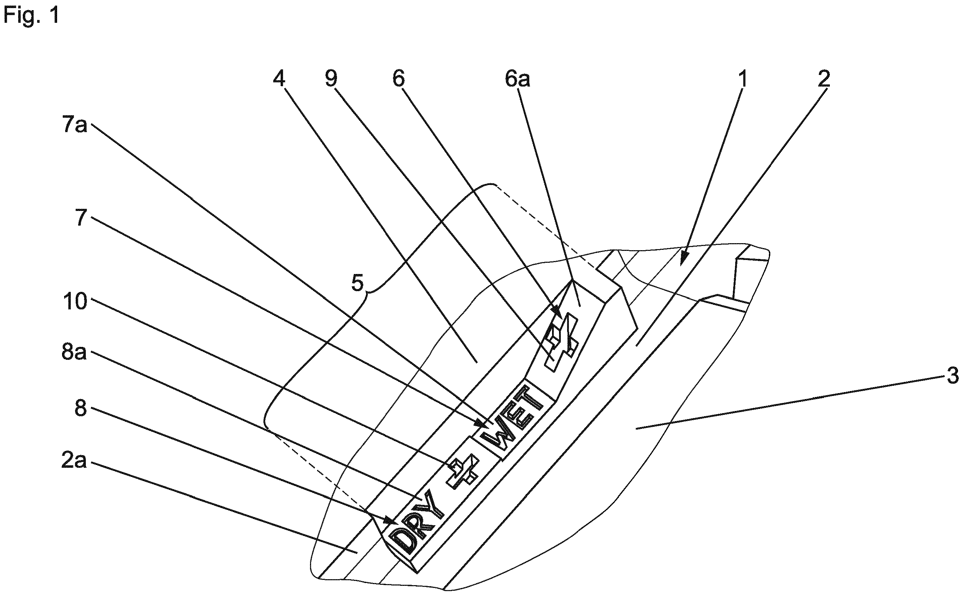

In dem in Fig.1 gezeigten Ausschnitt eines Laufstreifens sind eine in Umfangsrichtung umlaufende Umfangsnut 1, welche von einem Nutgrund 2 und zwei Nutflanken 2a begrenzt ist, wobei seitlich der Umfangsnut 1 Profilpositive 3 und 4 anschließen, und ein in der Umfangsnut 1 positionierter Abriebsindikator 5 dargestellt.

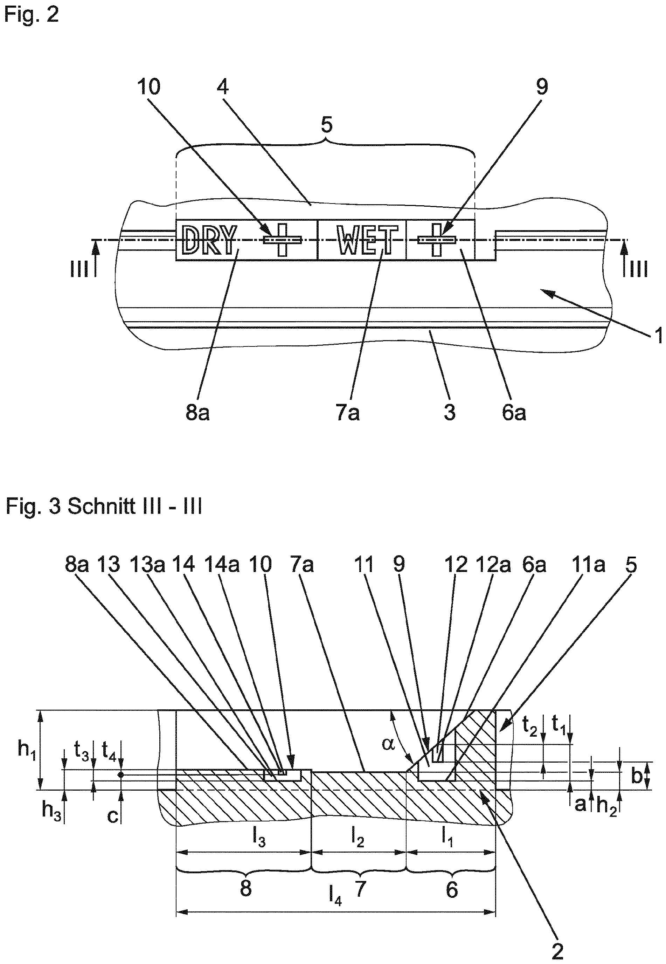

Bei den Profilpositiven 3 und 4 handelt es sich beispielsweise um Profilbänder oder um Profilblöcke. Der Abriebsindikator 5 erstreckt sich in Umfangsrichtung, wobei er gegenüber dem Zentrum des Nutgrundes 2, wo die Umfangsnut 1 ihre größte Tiefe aufweist, die der spezifizierten Profiltiefe des Reifens entspricht, in axialer Richtung versetzt ist. Bei der in Fig. 1 bis Fig. 7 gezeigten Ausführung ist der Abriebsindikator 5 geringfügig in eine Aussparung des Profilpositives 4 hineinversetzt, wie es insbesondere Fig. 2 zeigt, wobei jedoch der Großteil des Abriebsindikators 5 innerhalb der Umfangsnut 1 verläuft. Der Abriebsindikator 5 kann jedoch auch komplett innerhalb der Umfangsnut 1 verlaufen.

Der Abriebsindikator 5 weist drei Indikatorteile 6, 7 und 8 auf, welche sich aneinander angrenzend in Umfangsrichtung erstrecken und bezogen auf die tiefste Stelle des Nutgrundes 2 in radialer Richtung unterschiedliche Höhen h₁, h₂, h₃ (Fig. 3) aufweisen. Bei der gezeigten Ausführungsform endet der Indikatorteil 6 niveaugleich mit dem Profilpositiv 4.

Der Indikatorteil 6 ist keilförmig ausgebildet und weist daher als Indikatoroberfläche 6a eine Rampe auf, von welcher in radialer Richtung eine Vertiefung 9 ausgeht, welche in Draufsicht die Form eines "Plus" (+) aufweist. Die Indikatorteile 7 und 8 sind im Wesentlichen quaderförmig mit parallel zur Laufstreifenoberfläche verlaufenden Indikatoroberflächen 7a, 8a, von welchen ebenfalls in radialer Richtung Vertiefungen ausgehen. Die Vertiefungen des Indikatorteiles 7 sind dabei derart ausgebildet, dass sie das Wort "W E T" bilden. Der Indikatorteil 8 besitzt eine Vertiefung 10, ebenfalls in Form eines "Plus" (+), sowie weitere Vertiefungen, die das Wort "D R Y" bilden. Die Vertiefungen, welche die Wörter "D R Y" und "W E T" bilden, sind derart ausgeführt, dass zwischen dem Grund der Vertiefungen und dem Nutgrund 2 ein in radialer Richtung gemessener Abstand von 1mm, insbesondere von maximal 1,4 mm, vorliegt. Im Neuzustand des Reifens ist bei Sicht auf den Abriebsindikator 5 "D R Y + W E T +" zu lesen.

In Fig. 3 ist eine Schnittdarstellung des Abriebsindikators 5 entlang der Linie III-III der Fig. 2 dargestellt, wobei für die Höhenangaben der Indikatorteile 6, 7, 8 die tiefste Stelle des Nutgrundes 2 durch eine strichlierte Linie angedeutet ist. Aus Gründen der Übersicht wurde auf die Darstellung der Vertiefungen, welche die Schriftzüge "D R Y" und "W E T" bilden, verzichtet. Die nachfolgenden Längenangaben zu den Indikatorteilen 6, 7, 8 beziehen sich auf deren Längserstreckung in Richtung der Umfangsrille 1.

Der keilförmig ausgebildete Indikatorteil 6 weist beispielsweise eine Länge l₁ von 10 mm auf und erstreckt sich bis in die Höhe h₁. In der Höhe h₁ besitzt der Indikatorteil 6 eine Breite von beispielsweise 2 mm bis 4 mm. Die als Rampe ausgebildete Indikatoroberfläche 6a ist gegenüber der Umfangsrichtung um einen Winkel a, welcher zwischen 40° und 50° beträgt, geneigt. Die Vertiefung 9 wird durch zwei zueinander orthogonal verlaufende Schlitze 11, 12 gebildet, wobei der Schlitz 11 parallel zur Richtung der Umfangsnut 1 verläuft. Die Schlitze 11, 12 ragen in radialer Richtung von der Indikatoroberfläche 6a ausgehend in den Indikatorteil 6 hinein und weisen unterschiedliche Tiefen t₁, t₂ auf. In den Tiefen t₁, t₂ weisen die Schlitze 11 und 12 je einen Schlitzgrund 11a, 12a auf, wobei der Schlitzgrund 12a durch den Schlitz 11 unterbrochen ist. Der Schlitzgrund 11a weist vom Nutgrund 2 einen in radialer Richtung gemessenen Abstand a auf, welcher kleiner als 1,6 mm, insbesondere 1,4 mm, ist. Zwischen dem Schlitzgrund 12a und dem Nutgrund 2 existiert ein Abstand b, welcher größer als der Abstand a ausgeführt ist und vorzugsweise 3,0 mm beträgt.

Der Indikatorteil 7 weist beispielsweise eine Länge l₂ von 8 mm und eine Höhe h₂ von 1,6 mm auf. Der Indikatorteil 7 kann jedoch auch höher ausgeführt sein, insbesondere kann seine Höhe h₂ der Höhe h₃ des Indikatorteils 8 entsprechen, welche insbesondere 2,2 mm beträgt. Die Länge l₃ des Indikatorteils 8 beträgt beispielsweise 12 mm. Die Vertiefung 10 des Indikatorteiles 8 wird durch zwei zueinander orthogonal verlaufende Schlitze 13, 14 gebildet, welche in radialer Richtung, ausgehend von der Indikatoroberfläche 8a, in den Indikatorteil 8 hineinreichen, wobei der Schlitz 13 parallel zur Erstreckung der in Fig. 3 nicht dargestellten Umfangsrille 1 verläuft. Der Schlitz 13 weist eine Tiefe t₃ und der Schlitz 14 eine Tiefe t₄ auf, wobei t₃ größer als t₄ ausgeführt ist. In den Tiefen t₃, t₄ weisen die Schlitze 13, 14 Schlitzgründe 13a, 14a auf, wobei der Schlitzgrund 14a durch den Schlitz 13 unterbrochen ist. Der Schlitzgrund 13a befindet sich in radialer Richtung vom Nutgrund 2 im Abstand a. Der Schlitzgrund 14a weist vom Nutgrund 2 einen radialen Abstand c auf, welcher größer als der Abstand a und kleiner als der Abstand b ist. Bei der dargestellten Ausführung beträgt der Abstand c 1,6 mm. Bei einer weiteren nicht dargestellten Ausführungsform kann der Abstand c vorzugsweise 1,9 mm betragen.

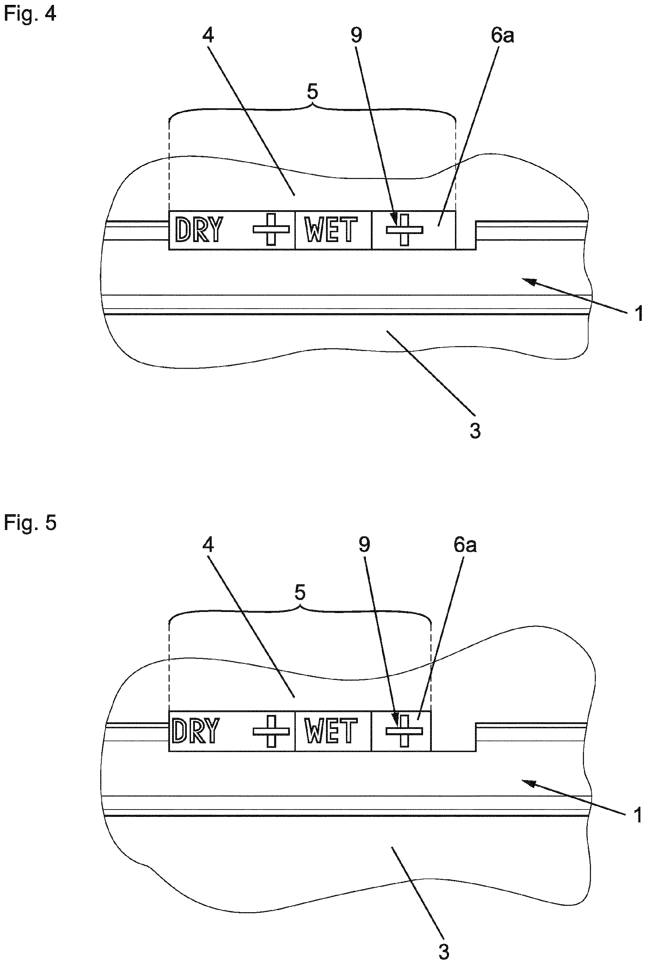

Nachfolgend wird unter Bezugnahme auf die Figuren 4 bis 7, welche unterschiedliche Abriebszustände des Abriebsindikators 5 aus Fig.1 darstellen, die Funktionsweise des Abriebsindikators 5 erläutert. Fig. 4 zeigt den Neuzustand mit dem Schriftzug "D R Y + W E T +". Der Abriebsindikator 5 vermittelt damit bei neuem Reifen einen Hinweis auf gute Fahreigenschaften auf trockener und nasser Fahrbahn. Dieser Schriftzug ist auch bei einer Profiltiefe von 5 mm, welche in Fig. 5 dargestellt ist, klar zu erkennen, wobei sich durch den Abrieb, gegenüber Fig. 4, die Rampe 6a des Indikatorteils 6 verkürzt hat. Daher ist mit Hilfe der Rampe gut abzuschätzen, ab wann es zu einem Abrieb im Bereich der Vertiefung 9 des Indikatorteils 6 kommt.

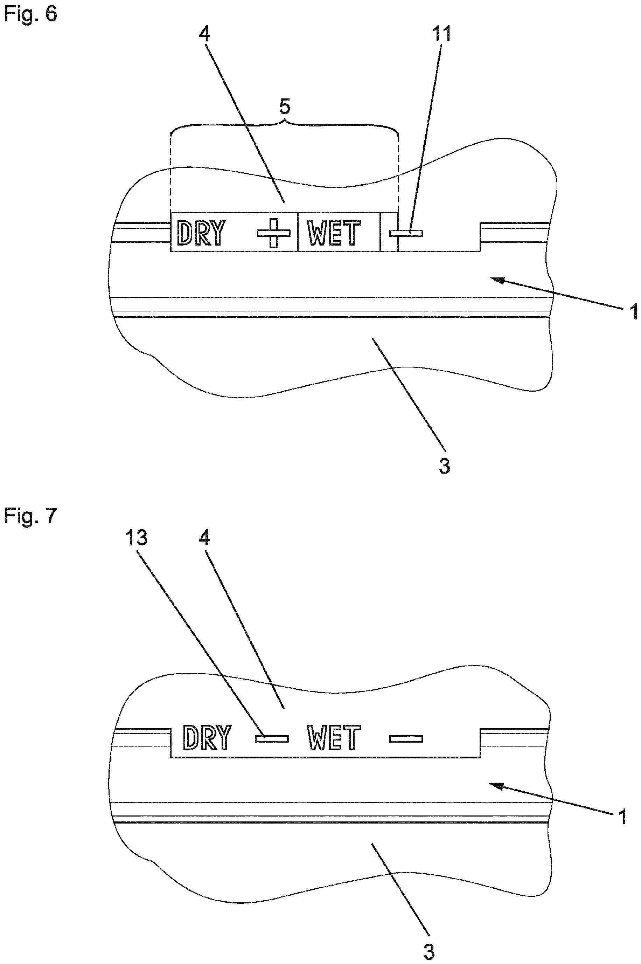

Wird der Laufstreifen im Laufe des Betriebs nun soweit abgerieben, dass die Profiltiefe unter 3,0 mm beträgt, tritt, wie in Figur 6 dargestellt, die Funktion des Schriftzuges in Kraft. Bei der in Fig. 6 dargestellten Profiltiefe von 2,5 mm wird die Vertiefung 9 nur noch durch den Schlitz 11 gebildet, da die Profiltiefe den Abstand b des Schlitzgrundes 12a vom Nutgrund 2a von 3,0 mm unterschritten hat. Bei Sicht auf den Abriebsindikator 5 ist der Schriftzug "D R Y + W E T -" zu erkennen, welcher einen Hinweis darauf gibt, dass gegenüber dem Neuzustand das Wasserableitvermögen des Reifens verringert ist.

In Fig. 7 beträgt die Profiltiefe nur noch 1,5 mm, sodass der Abriebsindikator 5 bereits soweit abgerieben ist, dass die gesetzlich Mindestprofiltiefe von 1,6 mm unterschritten ist. Bei dieser Profiltiefe wird die Vertiefung 10 nur mehr durch den Schlitz 13 gebildet. Der Schriftzug zeigt "D R Y - W E T -". Der Reifen sollte daher getauscht werden. Ab welcher Profiltiefe die Veränderung des Schriftzuges von "D R Y + W E T -" nach " D R Y - W E T -" auftritt, ist dabei von der gewählten Größe des Abstandes c des Schlitzgrundes 14a vom Nutgrund 2 abhängig. Wird der Abstand c mit 1,6 mm gewählt ist beim Erscheinen des Schriftzuges " D R Y - W E T-" die gesetzliche Mindestprofiltiefe bereits erreicht. Aus Sicherheitsgründen ist daher die Ausführung mit einem Abstand c von 1,9 mm zu bevorzugen.

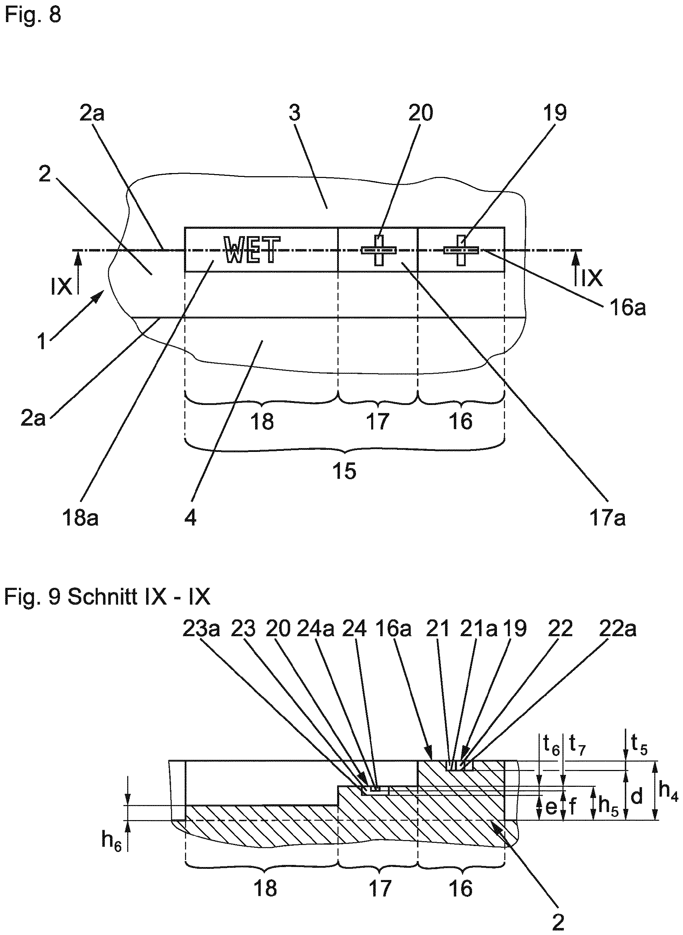

In Fig. 8 ist eine weitere Ausführungsform der Erfindung dargestellt. Im gezeigten Ausschnitt des Laufstreifens sind eine in Umfangsrichtung umlaufende Umfangsnut 1 mit einem Nutgrund 2 und zwei Nutflanken 2a dargestellt, wobei seitlich der Umfangsnut 1 Profilpositive 3 und 4 anschließen. Der in der Umfangsnut 1 positionierte Abriebsindikator 15 weist drei Indikatorteile 16, 17 und 18 auf, welche sich aneinander anschließend in Umfangsrichtung erstrecken. Die Indikatorteile 16, 17, 18 weisen parallel zur Laufstreifenoberfläche verlaufende Indikatoroberflächen 16a, 17a, 18a auf. Die Indikatoroberflächen 16a und 17a besitzen in radialer Richtung Vertiefungen 19 und 20, welchen jeweils in Form eines "+" ausgebildet sind. Der Indikatorteil 18 besitzt Vertiefungen zur Bildung des Wortes "W E T", wobei der radiale Abstand zwischen dem Nutgrund 2 und dem Grund dieser Vertiefungen maximal 1,6 mm beträgt.

Fig. 9 zeigt die Schnittdarstellung entlang der Line IX-IX der Fig. 8. Für die Höhenangaben der Indikatorteile 16, 17, 18 ist der Nutgrund 2 durch eine strichlierte Linie angedeutet. Aus Gründen der Übersicht wurde auf die Darstellung der Vertiefungen, welche den Schriftzug "W E T" bilden, verzichtet. Die Längen der Indikatorteile 16, 17, 18 sind vorzugsweise zu jenen der Indikatorteilen 6, 7, 8 identisch.

Der Indikatorteil 16 erstreckt sich bis in eine Höhe h₄ von beispielsweise 5,5 mm. Die von der Indikatoroberfläche 16a in radialer Richtung verlaufende Vertiefung 19 wird durch zwei zueinander orthogonal verlaufende Schlitze 21, 22 gebildet, welche beide eine Tiefe t₅ von 0,5 mm und einen Schlitzgrund 21a, 22a aufweisen. Der in radialer Richtung gemessene Abstand d zwischen dem Nutgrund 2 und dem Schlitzgrund 21a bzw. 22a beträgt demnach 5,0 mm.

Der Indikatorteil 17 reicht bis in eine Höhe h₅ von beispielsweise 3,2 mm und verfügt über die Vertiefung 20, welche ebenfalls durch zwei zueinander orthogonal verlaufende Schlitze 23, 24 mit je einem Schlitzgrund 23a, 24a gebildet wird, wobei der Schlitz 23 in Richtung der Umfangsrille 1 verläuft. Der Schlitz 23 weist eine Tiefe t₆ und der Schlitz 24 eine Tiefe t₇ auf, wobei t₆ größer als t₇ ausgeführt ist. Zwischen dem Schlitzgrund 23a und dem Nutgrund 2 liegt ein Abstand e von beispielsweise 1,9 mm vor. Ein Abstand f von beispielsweise 3,0 mm befindet sich zwischen dem Schlitzgrund 24a und dem Nutgrund 2. Der Indikatorteil 18 endet in einer Höhe h₆ von beispielsweise 1,9 mm.

Solange die Profiltiefe größer 5 mm ist, zeigt der Abriebsindikator 15 daher den Schriftzug "W E T + +", was auf ein zum Neuzustand unverändert gutes Wasserableitvermögen hindeutet. Ab einer Profiltiefe kleiner 5 mm geht der Schriftzug in "W E T +" und bei einer Profiltiefe kleiner 3 mm in "W E T - " über. Wird eine Profiltiefe von 1,9 mm unterschritten ist nur mehr "W E T" zu lesen. Dieser Schriftzug deutet auf die bei einer Profiltiefe von unter 1,9 mm besonders hohe Aquaplaninggefahr hin. Alternativ können die Vertiefungen des Schriftzuges " W E T" auch derart ausgeführt sein, dass der Abstand zwischen dem Grund des Schriftzuges und dem Nutgrund 2 beispielsweise 1,9 mm beträgt und daher ab Profiltiefen kleiner oder gleich 1,9 mm der Schriftzug "W E T" bereits abgerieben ist. Bei dieser Ausführungsform sind am Abriebsindikator 15 bei Profiltiefen kleiner 1,9 mm keine schriftlichen Hinweise mehr zu erkennen. Auch dies ist dann ein entsprechender Hinweis auf hohe Aquaplaninggefahr.

Durch einen derart ausgeführten Indikator kann das Wasserableitvermögen des Reifens beurteilt werden, wodurch frühzeitig die Profiltiefe, ab welcher die Gefahr von Aquaplaning zunimmt, einfach und schnell erkannt werden kann. Solche Reifen eignen sich insbesondere für den Einsatz in niederschlagsreichen Gebieten.

Bei einer weiteren, jedoch nicht dargestellten alternativen Variante des Abriebsindikators 15 aus Fig. 9, weist der Indikatorteil 16 anstelle von zwei sich kreuzenden Schlitzen 21, 22 vier gleich große quaderförmige Aussparungen auf, welche von der Oberfläche 16a in radialer Richtung bis in die Tiefe t₅ reichen, wodurch bei Sicht auf diesen Indikatorteil 16 ebenfalls ein "Plus" zu erkennen ist.

### Bezugsziffernliste

- 1: Umfangsnut
- 2: Nutgrund
- 2a: Nutflanke
- 3: Profilpositiv
- 4: Profilpositiv
- 5: Abriebsindikator
- 6: Indikatorteil
- 6a: Indikatoroberfläche, Rampe
- 7: Indikatorteil
- 7a: Indikatoroberfläche
- 8: Indikatorteil
- 8a: Indikatoroberfläche
- 9: Vertiefung
- 10: Vertiefung
- 11: Schlitz
- 11a: Schlitzgrund
- 12: Schlitz
- 12a: Schlitzgrund
- 13: Schlitz
- 13a: Schlitzgrund
- 14: Schlitz
- 14a: Schlitzgrund
- 15: Abriebsindikator
- 16: Indikatorteil
- 16a: Indikatoroberfläche
- 17: Indikatorteil
- 17a: Indikatoroberfläche
- 18: Indikatorteil
- 18a: Indikatoroberfläche
- 19: Vertiefung
- 20: Vertiefung
- 21: Schlitz
- 21a: Schlitzgrund
- 22: Schlitz
- 22a: Schlitzgrund
- 23: Schlitz
- 23a: Schlitzgrund
- 24: Schlitz
- 24a: Schlitzgrund
- hᵢ: Höhen der Indikatorteile
- lᵢ: Längen der Indikatorteile
- tᵢ: Tiefe der Schlitze
- a, b, c, d, e, f: radiale Abstände zwischen Nutgrund und Schlitzgrund

## Patentansprüche

1. Fahrzeugluftreifen mit einem Laufstreifen mit mindestens einem Abriebsindikator (5, 15), welcher sich in einer Umfangsnut (1) mit einem Nutgrund (2) erstreckt und aus unterschiedlich hohen Indikatorteilen (6, 7, 8; 16, 17, 18), deren Höhen (h₁, h₂, h₃; h₄, h₅, h₆) in radialer Richtung von der tiefsten Stelle der Umfangsnut (1) ermittelt werden, zusammengesetzt ist, wobei die Indikatorteile (6, 7, 8; 16, 17, 18) Symbole aufweisen, die, in Draufsicht betrachtet, eine schriftlicher Information liefern, welche sich mit zunehmendem Abrieb des Laufstreifens verändert, wobei die Symbole der Indikatorteile (6, 7, 8; 16, 17, 18) Informationen über sich mit der Profiltiefe des Fahrzeugluftreifens verändernde Fahreigenschaften liefern,
**dadurch gekennzeichnet,**
**dass** zumindest ein Indikatorteil (6, 8; 16, 17) von der Indikatoroberfläche (6a, 8a; 16a, 17a) ausgehend zwei zueinander orthogonal verlaufende Schlitze (11, 12; 13, 14; 21, 22; 23, 24) aufweist, welche einander kreuzen und unterschiedliche Tiefen (t₁, t₂; t₃, t₄; t₆, t₇) aufweisen.

2. Fahrzeugluftreifen nach Anspruch 1, **dadurch gekennzeichnet, dass** zumindest der Indikatorteil (6, 16) mit der größten Höhe (h₁, h₄) zwei zueinander orthogonal und in radialer Richtung verlaufende Schlitze (11, 12; 21, 22), welche einander kreuzen, aufweist.

3. Fahrzeugluftreifen nach der Anspruch 1 oder 2, **dadurch gekennzeichnet, dass** einer der zwei Schlitze (11, 13, 21, 23) in Richtung der Erstreckung der Umfangsnut (1) verläuft.

4. Fahrzeugluftreifen nach einem der Ansprüche 1 bis 3, **dadurch gekennzeichnet, dass** der tiefere Schlitz (11, 13, 23) parallel zur Erstreckung der Umfangsnut (1) verläuft.

5. Fahrzeugluftreifen nach einem der Ansprüche 1 bis 4, **dadurch gekennzeichnet, dass** der kleinste Abstand (b, c, d, f) zwischen einem orthogonal zur Umfangsrichtung verlaufenden Schlitz (12, 14, 22, 24) und dem Nutgrund (2) 1,6 mm, insbesondere 1,9 mm, beträgt.

6. Fahrzeugluftreifen nach einem der Ansprüche 1 bis 5, **dadurch gekennzeichnet, dass** der Indikatorteil (6) mit der größten Höhe (h₁) keilförmig ausgebildet ist und eine gegenüber der Umfangsrichtung geneigte rampenförmige Indikatoroberfläche (6a) aufweist.

7. Fahrzeugluftreifen nach einem der Ansprüche 1 bis 6, **dadurch gekennzeichnet, dass** zumindest ein Indikatorteil (7, 18) Symbole in Form des Schriftzuges "W E T" enthält.

8. Fahrzeugluftreifen nach Anspruch 7, **dadurch gekennzeichnet, dass** der Schriftzug "W E T" durch Vertiefungen gebildet wird, wobei der Grund der Vertiefungen, in radialer Richtung gemessen, zum Nutgrund (2) einen Abstand von maximal 1,4 mm aufweist.

9. Fahrzeugluftreifen nach Anspruch 7, **dadurch gekennzeichnet, dass** der Schriftzug "W E T" durch Vertiefungen gebildet wird, wobei der Grund der Vertiefungen, in radialer Richtung gemessen, zum Nutgrund (2) einen Abstand von mindestens 1,9 mm aufweist.

10. Fahrzeugluftreifen nach einem der Ansprüche 1 bis 9, **dadurch gekennzeichnet, dass** zumindest ein Indikatorteil (8) Symbole in Form des Schriftzuges "D R Y" enthält.

11. Fahrzeugluftreifen nach Anspruch 10, **dadurch gekennzeichnet, dass** der Schriftzug "D R Y" durch Vertiefungen gebildet wird, wobei der Grund der Vertiefungen, in radialer Richtung gemessen, zum Nutgrund (2) einen Abstand von maximal 1,4 mm aufweist.

12. Fahrzeugluftreifen nach einem der Ansprüche 1 bis 11, **dadurch gekennzeichnet, dass** zumindest einer der Indikatorteile (7, 8, 18), welcher Symbole in Form von Schriftzügen enthält, von allen Indikatorteilen die geringste Höhe (h₂, h₃, h₆) aufweist.

13. Fahrzeugluftreifen nach einem der Ansprüche 1 bis 12, **dadurch gekennzeichnet, dass** der Abriebsindikator (15) aus einem Indikatorteil (8) mit dem Schriftzug "D R Y", welcher auch eine aus zwei zueinander orthogonal verlaufenden Schlitzen (13, 14) bestehende Vertiefung (10) aufweist, einen an diesen Indikatorteil (8) anschließenden Indikatorteil (7) mit dem Schriftzug "W E T" und dem keilförmigen Indikatorteil (6) zusammengesetzt ist.

14. Fahrzeugluftreifen nach einem der Ansprüche 1 bis 13, **dadurch gekennzeichnet, dass** der Abriebsindikator (5) aus einem Indikatorteil (18) mit dem Schriftzug "W E T" und zwei an diesen Indikatorteil (18) anschließenden Indikatorteilen (16, 17) zusammengesetzt ist, welche unterschiedlich hoch und höher als der Indikatorteil (18) mit dem Schriftzug "W E T" ausgeführt sind, wobei diese Indikatorteile (16, 17) jeweils eine aus zwei zueinander orthogonal verlaufenden Schlitzen (21, 22; 23, 24) bestehende Vertiefung (19, 20) aufweisen.

15. Fahrzeugluftreifen nach Anspruch 14, **dadurch gekennzeichnet, dass** die Schlitze (21, 22) im höchsten Indikatorteil (16) gleiche Tiefen (t₅) aufweisen.

## Claims

1. Pneumatic vehicle tyre comprising a tread with at least one abrasion indicator (5, 15), which extends in a circumferential groove (1) with a groove base (2) and is made up of indicator parts (6, 7, 8; 16, 17, 18) of different heights, the heights (h₁, h₂, h₃; h₄, h₅, h₆) of which are determined in the radial direction from the deepest point of the circumferential groove (1), the indicator parts (6, 7, 8; 16, 17, 18) having symbols which, when viewed in plan view, provide written information that changes with increasing abrasion of the tread, the symbols of the indicator parts (6, 7, 8; 16, 17, 18) providing information about driving characteristics that change with the profile depth of the pneumatic vehicle tyre,
**characterized**
**in that** at least one indicator part (6, 8; 16, 17) has, extending from the indicator surface (6a, 8a; 16a, 17a), two slits (11, 12; 13, 14; 21, 22; 23, 24), which run orthogonally in relation to one another, cross one another and have different depths (t₁, t₂; t₃, t₄; t₆, t₇).

2. Pneumatic vehicle tyre according to Claim 1,
**characterized in that** at least the indicator part (6, 16) with the greatest height (h₁, h₄) has two slits (11, 12; 21, 22), which run orthogonally in relation to one another and in the radial direction and cross one another.

3. Pneumatic vehicle tyre according to Claim 1 or 2,
**characterized in that** one of the two slits (11, 13, 21, 23) runs in the direction of the extent of the circumferential groove (1).

4. Pneumatic vehicle tyre according to one of Claims 1 to 3, **characterized in that** the deeper slit (11, 13, 23) runs parallel to the extent of the circumferential groove (1).

5. Pneumatic vehicle tyre according to one of Claims 1 to 4, **characterized in that** the smallest distance (b, c, d, f) between a slit (12, 14, 22, 24) running orthogonally to the circumferential direction and the groove base (2) is 1.6 mm, in particular 1.9 mm.

6. Pneumatic vehicle tyre according to one of Claims 1 to 5, **characterized in that** the indicator part (6) with the greatest height (h₁) is formed as a wedge and has a ramp-shaped indicator surface (6a) that is inclined with respect to the circumferential direction.

7. Pneumatic vehicle tyre according to one of Claims 1 to 6, **characterized in that** at least one indicator part (7, 18) contains symbols in the form of the inscription "W E T".

8. Pneumatic vehicle tyre according to Claim 7,
**characterized in that** the inscription "W E T" is formed by depressions, the base of the depressions, measured in the radial direction, being at a distance from the groove base (2) of at most 1.4 mm.

9. Pneumatic vehicle tyre according to Claim 7,
**characterized in that** the inscription "W E T" is formed by depressions, the base of the depressions, measured in the radial direction, being at a distance from the groove base (2) of at least 1.9 mm.

10. Pneumatic vehicle tyre according to one of Claims 1 to 9, **characterized in that** at least one indicator part (8) contains symbols in the form of the inscription "D R Y".

11. Pneumatic vehicle tyre according to Claim 10,
**characterized in that** the inscription "D R Y" is formed by depressions, the base of the depressions, measured in the radial direction, being at a distance from the groove base (2) of at most 1.4 mm.

12. Pneumatic vehicle tyre according to one of Claims 1 to 11, **characterized in that** at least one of the indicator parts (7, 8, 18) that contains symbols in the form of inscriptions has the smallest height (h₂, h₃, h₆) of all the indicator parts.

13. Pneumatic vehicle tyre according to one of Claims 1 to 12, **characterized in that** the abrasion indicator (15) is made up of an indicator part (8) with the inscription "D R Y", which also has a depression (10) consisting of two slits (13, 14) running orthogonally in relation to one another, an indicator part (7) with the inscription "W E T", adjoining this indicator part (8), and the wedge-shaped indicator part (6).

14. Pneumatic vehicle tyre according to one of Claims 1 to 13, **characterized in that** the abrasion indicator (5) is made up of an indicator part (18) with the inscription "W E T" and two indicator parts (16, 17), which adjoin this indicator part (18), are of different heights and are higher than the indicator part (18) with the inscription "W E T", these indicator parts (16, 17) respectively having a depression (19, 20) consisting of two slits (21, 22; 23, 24) running orthogonally in relation to one another.

15. Pneumatic vehicle tyre according to Claim 14,
**characterized in that** the slits (21, 22) in the highest indicator part (16) have equal depths (t₅).

## Revendications

1. Pneumatique de véhicule avec une bande de roulement avec au moins un indicateur d'usure (5, 15) qui s'étend dans une rainure périphérique (1) avec une base de rainure (2) et qui se compose de parties d'indicateur (6, 7, 8 ; 16, 17, 18) à des hauteurs différentes, dont les hauteurs (h₁, h₂, h₃ ; h₄, h₅, h₆) sont déterminées dans la direction radiale à partir du point le plus profond de la rainure périphérique (1), les parties d'indicateur (6, 7, 8 ; 16, 17, 18) présentant des symboles qui, en vue de dessus, fournissent une information écrite qui change en fonction de l'usure croissante de la bande de roulement, les symboles des parties d'indicateur (6, 7, 8 ; 16, 17, 18) fournissant des informations sur les propriétés de conduite s'altérant avec la profondeur de profilé du pneumatique de véhicule,
**caractérisé en ce**
**qu'**au moins une partie d'indicateur (6, 8 ; 16, 17), partant de la surface d'indicateur (6a, 8a ; 16a, 17a), présente deux fentes (11, 12 ; 13, 14 ; 21, 22 ; 23, 24) s'étendant perpendiculairement l'une à l'autre, qui présentent des profondeurs différentes s' intersectant (t₁, t₂ ; t₃, t₄ ; t₆, t₇).

2. Pneumatique de véhicule selon la revendication 1,
**caractérisé en ce qu'**au moins la partie d'indicateur (6, 16) ayant la plus grande hauteur (h₁, h₄) présente deux fentes (11, 12 ; 21, 22) perpendiculaires l'une à l'autre et s'étendant dans la direction radiale, qui s'intersectent.

3. Pneumatique de véhicule selon la revendication 1 ou 2, **caractérisé en ce que** l'une des deux fentes (11, 13, 21, 23) s'étend dans la direction de l'étendue de la rainure périphérique (1).

4. Pneumatique de véhicule selon l'une quelconque des revendications 1 à 3, **caractérisé en ce que** la fente la plus profonde (11, 13, 23) s'étend parallèlement à l'étendue de la rainure périphérique (1).

5. Pneumatique de véhicule selon l'une quelconque des revendications 1 à 4, **caractérisé en ce que** la plus petite distance (b, c, d, f) entre une fente s'étendant perpendiculairement à la direction périphérique (12, 14, 22, 24) et la base de rainure (2) mesure 1,6 mm, en particulier 1,9 mm.

6. Pneumatique de véhicule selon l'une quelconque des revendications 1 à 5, **caractérisé en ce que** la partie d'indicateur (6) ayant la plus grande hauteur (h₁) est réalisée en forme de coin et présente une surface d'indicateur (6a) en forme de rampe inclinée par rapport à la direction périphérique.

7. Pneumatique de véhicule selon l'une quelconque des revendications 1 à 6, **caractérisé en ce qu'**au moins une partie d'indicateur (7, 18) contient des symboles sous la forme du sigle "W E T".

8. Pneumatique de véhicule selon la revendication 7,
**caractérisé en ce que** le sigle "W E T" est formé par des renfoncements, la base des renfoncements, mesurée dans la direction radiale, présentant par rapport à la base de rainure (2) une distance de 1,4 mm au maximum.

9. Pneumatique de véhicule selon la revendication 7,
**caractérisé en ce que** le sigle "W E T" est formé par des renfoncements, la base des renfoncements, mesurée dans la direction radiale, présentant par rapport à la base de rainure (2) une distance d'au moins 1,9 mm.

10. Pneumatique de véhicule selon l'une quelconque des revendications 1 à 9, **caractérisé en ce qu'**au moins une partie d'indicateur (8) contient des symboles sous la forme du sigle "D R Y".

11. Pneumatique de véhicule selon la revendication 10,
**caractérisé en ce que** le sigle "D R Y" est formé par des renfoncements, la base des renfoncements, mesurée dans la direction radiale, présentant par rapport à la base de rainure (2) une distance de 1,4 mm au maximum.

12. Pneumatique de véhicule selon l'une quelconque des revendications 1 à 11, **caractérisé en ce qu'**au moins l'une des parties d'indicateur (7, 8, 18) qui contient des symboles sous la forme de sigles, présente parmi toutes les parties d'indicateur la plus faible hauteur (h₂, h₃, h₆).

13. Pneumatique de véhicule selon l'une quelconque des revendications 1 à 12, **caractérisé en ce que** l'indicateur d'usure (15) est constitué d'une partie d'indicateur (8) avec le sigle "D R Y", qui présente également un renfoncement (10) constitué de deux fentes (13, 14) s'étendant perpendiculairement l'une à l'autre, d'une partie d'indicateur (7) se raccordant à cette partie d'indicateur (8), avec le sigle "W E T", et de la partie d'indicateur (6) en forme de coin.

14. Pneumatique de véhicule selon l'une quelconque des revendications 1 à 13, **caractérisé en ce que** l'indicateur d'usure (5) est constitué d'une partie d'indicateur (18) avec le sigle "W E T" et de deux parties d'indicateur (16, 17) se raccordant à cette partie d'indicateur (18), qui sont réalisées avec une hauteur différente et qui sont plus hautes que la partie d'indicateur (18) avec le sigle "W E T", ces parties d'indicateur (16, 17) présentant chacune un renfoncement (19, 20) constitué de deux fentes (21, 22 ; 23, 24) s'étendant perpendiculairement l'une à l'autre.

15. Pneumatique de véhicule selon la revendication 14,
**caractérisé en ce que** les fentes (21, 22) présentent la même profondeur (t₅) dans la partie d'indicateur la plus haute (16).
